# EUROPEAN PATENT SPECIFICATION

(11) **EP 3 316 391 B1**
(45) Date of publication and mention of the grant of the patent: **19.05.2021**
(21) Application number: 16195845.9
(22) Date of filing: 26.10.2016
(51) Int. Cl.: H01M 10/655, H01M 10/658

(54) **BATTERY SYSTEM, BASE PLATE FOR A BATTERY SYSTEM AND ELECTRIC VEHICLE**
BATTERIESYSTEM, GRUNDPLATTE FÜR EIN BATTERIESYSTEM UND ELEKTROFAHRZEUG
SYSTÈME DE BATTERIE, ASSISE DE SYSTÈME DE BATTERIE ET VÉHICULE ÉLECTRIQUE

(43) Date of publication of application: 02.05.2018
(73) Proprietor: Samsung SDI Co., Ltd., Giheung-gu Yongin-si, Gyeonggi-do 17084 (KR)
(72) Inventor: Golubkov, Andrej, 8010 Graz (AT)
(74) Representative: Gulde & Partner

(56) References cited:
- EP-A1- 2 405 528
- EP-A1- 3 070 780
- WO-A1-2012/156363
- JP-A- 2009 301 877
- US-A- 5 949 650

## Description

### Field of the Invention

The present invention relates to a battery system, particularly to a battery system comprising a base plate that is configured for preventing thermal runaway propagation, to a base plate for a battery system, particularly to a base plate with an anisotropic thermal conductivity, and to an electric vehicle comprising such battery system and/or such base plate.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof may be arranged in a common housing. In modular designs, pluralities of battery cells are connected to form submodules and several submodules are connected to form the battery module. The battery management functions can then be at least partially realized on either module or submodule level and thus interchangeability can be improved. One or more battery modules are mechanically and electrically integrated, equipped with a thermal management system and set up for communication with one or more electrical consumers in order to form a battery system.

The mechanical integration of a battery system requires appropriate mechanical connection of the individual components, e.g. of battery submodules among themselves and with structures of a system providing the electrical consumers, e.g. a vehicle. These connections must be designed to remain functional and save during the average service life of the battery system and under the stresses provided during use of the consumers. Further, installation space and interchangeability requirements must be met, especially in mobile applications.

Mechanical integration of battery modules can be achieved by providing a base plate and by positioning individual battery cells or submodules thereon. Fixing the battery cells or submodules can be achieved by fitted depressions in the carrier plate, by mechanical interconnectors as bolts or screws or by confining the cells or submodules. Confinement can be achieved by fastening side plates to lateral sides of the carrier plate and/or by providing a further carrier plate atop and fixing it to the first carrier plate and/or side plates. Thus, multilevel battery modules can be constructed, wherein the carrier plates and/or side plates may contain coolant ducts for providing cooling of the cells or submodules.

Mechanical integration of battery submodules can be achieved by providing mechanically reinforced electrical connectors or by fastening the battery cells onto carrier beams or struts additionally to the electrical connectors. Additionally or alternatively the submodules can be arranged in individual casings covering some or all of the surfaces of a battery submodule and arranged into a battery module, e.g. onto a carrier plate, within these individual casings.

To provide electrical integration of a battery system in modular designs either submodules with a plurality of cells connected in parallel are connected in series (*XsYp*) or submodules with a plurality of cells connected in series are connected in parallel (*XpYs*). *XsYp* type submodules can generate high voltages but the voltage level of each cell hast to be controlled individually and thus wiring complexity is increased. In *XpYs* type submodules the voltage levels of the cells connected in parallel are automatically balanced. Thus it is sufficient to control the voltage on submodule level and wiring complexity is reduced. In submodules of cells connected in parallel the capacitance of the cells add up and thus *XpYs* type submodules are mostly used for low capacitance cells.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers. Battery systems usually comprise a battery management system for processing this information.

To provide thermal control of a battery system a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cooling devices for effectively emitting/discharging/dissipating heat from the cells is required.

An example of such abnormal operation condition is a thermal runaway of a battery cell that may be entered by strongly overheated or overcharged Lithium ion cell. The critical temperature for transiting into thermal runaway is typically above 150°C and may be exceeded due to a local failure, as an internal short circuit of a cell, heating from a bad electrical contact or a short circuit to an adjacent cell. A thermal runaway is a self-accelerating chemical process inside the cell, which produces high amounts of heat and gas, until all available material is exhausted and during which the failed cell may heat up to cell temperatures higher than 700°C and may eject large quantities of hot gas into the system.

The failing cell can transfer large amounts of heat to its adjacent cells during thermal runaway. These neighboring cells receive heat due to direct contact to the failing cell, due to heat conduction via the base plate and/or via their electrical connectors. Thus, the adjacent cells are prone to transit into thermal runaway as well and thermal runaway propagation might occur through the whole battery module, eventually resulting in a battery fire and/or total loss of an electric vehicle.

According to the prior art, a battery system may comprise a base plate that is provided with active cooling means for dissipating heat. However, these active cooling means are usually configured to provide uniform cooling to the attached battery cells. Hence, thermal gradients due to failing cells and thus the danger of thermal spreading and multiple failing cells persist. Examples of base plates with cooling means for such uniform cooling, such as e.g., a plurality of cooling fins that protrude downwardly away from battery cells of a battery system, are disclosed in JP 2009-301877 A, EP 3 070780 A1, EP 2 405528 A1 and WO 2012/156363 A1.

It is thus an object of the present invention to overcome or reduce at least some of the drawbacks of the prior art and to provide a battery system with an improved cooling of battery cells for preventing an unwanted spreading of heat and of thermal failing.

### Summary of the Invention

One or more of the drawbacks of the prior art could be avoided or at least reduced by means of the present invention. In particular, according to a first aspect of the invention a battery system is provided in accordance with the appended claims. According to another aspect of the invention, a base plate is provide in accordance with the appended claims.

According to an embodiment, a battery system is provided comprising a plurality of battery modules and a base plate. The battery modules are arranged apart from each other in a first direction and each of the battery modules comprises a plurality of aligned battery cells arranged in a second direction. Preferably, the first direction and the second direction are substantially perpendicular to each other, particularly preferred they enclose an angle of approximately 90°. Each of the battery cells comprises an electrode assembly that is accommodated in a battery case, wherein each battery case comprises a bottom surface.

In the battery system of the invention, a base plate is supporting the battery modules and comprises a first main surface that is in thermal contact with the bottom surfaces of each of the pluralities of battery cases. Preferably, the base plate is essentially flat and/or spans at least one surface between the first direction and the second direction. Further preferred, the base plate's extension in a third direction is significantly smaller than in the first and second direction, wherein the third direction is substantially perpendicular to the first and second direction. According to the present invention, the thermal conductivity of the base plate in the first direction is larger than the thermal conductivity of the base plate in the second direction.

Thus, within the battery system according to the present invention, the heat emitted by a battery cell is more effectively transferred in the first direction than in the second direction.

Hence, the heat is transferred away from immediately neighbored cells in the same module as an emitting cell and is transferred to cells of an adjacent battery module instead. Thus, the heat conduction in the base plate causes a more homogeneous heat spreading over the entire battery system. Thereby, the total increase in heat can be reduced in individual battery cells, particularly in battery cells of the same module as a failing cell and adjacent to the failing cell, and thus the risk of thermal runaway propagation is reduced.

According to the present invention, the base plate comprises a first material with a first heat conductivity. The base plate further comprises a plurality of insulating structures that extend in the first direction and have a second heat conductivity that is lower than the first heat conductivity. The insulating structures are preferably integrated to the base plate and may penetrate the first main surface of the base plate or may be arranged proximal to the first main surface within the base plate. Further preferred, the insulating structures are in thermal contact with the first main surface and/or are embedded to the first main surface. The insulating structures are spaced apart in the second direction and/or are parallel to each other.

The insulating structures periodically interrupt the heat conduction via the base plate in the second direction and thus effectively lower the base plate's heat transfer coefficient, at least the coefficient's component related to the second direction. Preferably, the base plate consists of a first material, e.g. aluminum or a thermally conductive polymer, or of a first mix of materials, e.g. a metal alloy or a polymer mixture. The insulating structures comprise of a second material with the second heat conductivity, e.g. a metal, polymer or ceramic with low heat conductivity. Alternatively, the insulating structures may realize the low heat conductivity due to structural features, e.g. multiple voids or cavities.

In principal, the battery cases may be prismatic battery cases, cylindrical battery cases or flexible battery pouches as long as a bottom surface of the battery cases is in thermal contact with the base plate. However, in a preferred embodiment each battery case comprises a first wide side surface and second wide side surface, i.e. a pair of first lateral side walls, that are connected vertically to end portions of the bottom surface and that are aligned in the first direction. Further preferred, the first wide side surface is facing the second wide side surface and the bottom surface has a basically rectangular shape. The battery cases may further comprise a pair of second lateral side walls connected vertically to end portions of the bottom surface, facing each other and being perpendicular to the pair of first lateral side walls. The bottom surface, the first pair lateral side walls and the second pair lateral side walls preferably enclose a volume for the electrode assembly. A cap assembly, preferably comprising the battery cell's terminals, is preferably arranged opposite to the bottom surface for closing the case. In other words, the battery cells are prismatic battery cells housed in a casing can.

According to this embodiment, each battery module comprises a plurality of prismatic battery cells that are stacked in the second direction, such that a second wide side surface of a first battery cell is facing a first wide side surface of an adjacent second battery cell of the same module. The stacked battery cells are not in direct contact but a gap extends in the second direction between the second wide side surface wall of a first battery cell and the first wide side surface of a second battery cell adjacent to the first battery cell in the same module. The gap may be void, filled with a thermally insulating spacer and/or used for active cooling of the side surfaces of the neighbored cells. According to the preferred embodiment, each of the insulating structures is aligned with one of the gaps along the first direction. In other words, the insulating structures are disposed between adjacent cells of the same battery module. If the battery modules are aligned, the insulating structures can run along the gaps of multiple battery modules. As the wide side surfaces of adjacent battery cells are not in direct contact, the heat transfer between these cells occurs mainly by heat conduction through the base plate. By positioning the insulating structures in the base plate and aligning them with the gaps between the cells, these heat conduction paths between adjacent cells are interrupted.

Particularly preferred, the insulating structures extend continuously across substantially the whole length of the base plate in the first direction. Particularly preferred, the insulating structures extend across the whole length of an active region of the base plate, wherein the battery modules are disposed within the active region of the base plate. Advantageously, the continuous insulating structures interrupt heat conduction in the second direction across the whole length of the base plate along the first direction. Further, a base plate with continuously extending insulating structures is easily manufactured. However, according to an alternate preferred embodiment, the insulating structures extend as broken lines across the whole length of the base plate in the first direction, wherein interstices of the insulating structures are disposed between adjacent battery modules. In this embodiment the heat conductivity of the base plate in the second direction can still be sufficiently reduced, while the mechanical stability of the base plate might be increased to the aforementioned embodiment.

According to a first implementation of the invention, the insulating structures extend from a first main surface of the base plate to a second main surface of the base plate that is opposite to the first main surface, i.e. the insulating structures pass completely through the base plate from the first to the second main surface. In other words, in a cross section along the second direction of the base plate sections with first heat conductivity, e.g. from a first material, are followed by sections with second heat conductivity, e.g. from a second material, and vice versa. A base plate according to this embodiment might be produced by introducing, e.g. by milling, a plurality of recesses extending in the first direction in a first main surface of a base plate, filling the recesses with a material with lower heat conductivity compared to the base plate and thinning the base plate from a second main surface opposite to the first surface until the second main surface meets the filled recesses. Alternatively, a plurality of insulating structures, e.g. from a thermally insulating and high temperature resistant polymer, are introduced in a casting mold and are firmly bonded into a base plate, e.g. from aluminum, casted in this this mold. A base plate according to this embodiment strongly decreases the heat conduction through the base plate in the second direction at each insulating structure, as no bypass path exists for heat conduction around the insulating structure.

According to a second implementation of the invention , the insulating structures are recesses that are embedded within the first main surface of the base plate. In other words, the insulating structures extend from a first main surface of the base plate towards a second main surface opposite to the first main surface, but do not pass completely through the base plate. A base plate according to this embodiment may be produced as described before by milling the recesses, wherein the thinning of the base plate from the second main surface is omitted. Further preferred, a base plate comprising such recesses from the beginning is casted in a suitable mold and thus costs of material are reduced. According to these embodiments, the recesses remain either as hollows or become filled with a material with a second heat conductivity that is lower than the first heat conductivity. Particularly preferred, the recesses are filled with a thermally insulating polymer. According to this embodiment, a mechanically stable base plate with anisotropic heat conductivity can be easily manufactured.

Further preferred, the battery system according to the present invention comprises a plurality of heat sink structures that extend in the first direction. Further preferred, the heat sink structures are spaced apart in the second direction and/or are parallel to each other. The base plate may comprise the heat sink structures additionally or alternatively to the insulating structures. Particularly, the heat sink structures and the insulating structures may be alternating in the second direction of the base plate. According to the present embodiment, each heat sink structure is aligned with a bottom surface of at least one battery case, preferably with bottom surfaces of a plurality of battery cases. In other words, each heat sink structure is in thermal contact with a bottom surface of at least one and preferably more battery cases. The heat sink structures are configured to increase the base plate's heat conductivity along the first direction. Thus, the desired and advantageous anisotropy of the base plate's heat conductivity is realized or increased. Heat emitted by a failing cell is carried away from neighboring cells of the same module as it is preferably conducted to an adjacent module along the first direction. Particularly preferred, the heat sink structures comprise a third material with a third thermal conductivity higher than the first heat conductivity, i.e. the heat conductivity of the base plate, and/or the second heat conductivity, i.e. the heat conductivity of the insulating structures.

Further preferred, the heat sink structures are cooling channels that are integrated in the base plate and that are configured for guiding a coolant. The cooling channels are configured to increase the heat conductivity and/or the heat dissipation of the base plate along the first direction, the latter at least while they are filled with coolant. The heat sink structures, e.g. the coolant channels, preferably extend continuously across the whole length of the base plate in the first direction. Preferably, the coolant channels further comprise coolant ports at each of its terminal endings that are configured to be attached to an external coolant circuit. Further preferred, the coolant channels itself are formed of a third material with a third thermal conductivity that is higher than the first heat conductivity and/or the second heat conductivity. The third material might be copper. As a water-based or organic coolant flows through the coolant channels, the base plate's heat conductivity as well as its heat dissipation along the first direction is increased.

Another aspect of the present invention relates to a base plate for a battery system, i.e. a base plate configured to support a plurality of battery modules, wherein the base plate spans at least one surface between a first direction and a second direction and wherein the thermal conductivity of the base plate in the first direction is larger than the thermal conductivity of the base plate in the second direction. Preferably, a thickness of the base plate in a third direction that is perpendicular to the first and second direction is smaller than the base plate's extension in the first and second direction. Further preferred, the base plate for a battery system is configured for supporting a plurality of battery modules arranged apart from each other in a first direction, each comprising a plurality of aligned battery cells arranged in a second direction, wherein each of the battery cells comprises an electrode assembly accommodated in a battery case with a bottom surface. According to the invention, the base plate comprises a first main surface configured for being in thermal contact with the bottom surfaces of each of the pluralities of battery cases, wherein the thermal conductivity of the base plate in the first direction is larger than the thermal conductivity of the base plate in the second direction.

Thus, the base plate according to the present invention more effectively transfers the heat emitted by a battery cell along the first direction than along the second direction. Hence, the heat is transferred away from immediately neighbored cells of the emitting cell and is instead transferred to cells of an adjacent battery module. The anisotropic heat conduction in the base plate causes a more homogeneous heat spreading between battery cells supported by the base plate. Thereby, the base plate can reduce the maximal increase in heat in individual battery cells and decreases the risk of thermal runaway propagation.

According to the present invention, the base plate comprises a first material with a first heat conductivity. Preferably it consists of a first material or a first mix of materials with a first heat conductivity. The base plate further comprises a plurality of insulating structures that extend in the first direction and that have a second heat conductivity that is lower than the first heat conductivity. The insulating structures are preferably integrated to the base plate and may penetrate the first main surface of the base plate or may be arranged proximal to the first main surface within the base plate. Further preferred, the insulating structures are in thermal contact with the first main surface and/or are embedded to the first main surface. The insulating structures are spaced apart in the second direction and/or are parallel to each other.

The insulating structures periodically interrupt the heat conduction through the base plate along the second direction and thus effectively lower the base plate's heat transfer coefficient, at least the coefficient's component related to the second direction. Preferably, the base plate consists of a first material, e.g. aluminum or a thermally conductive polymer, or of a first mix of materials, e.g. a metal alloy or a polymer mixture. The insulating structures preferably comprise a second material with the second heat conductivity, e.g. a metal, polymer or ceramic with low heat conductivity.

Particularly preferred, the insulating structures extend continuously across substantially the whole length of the base plate in the first direction. Particularly preferred, the insulating structures extend across the whole length of an active region of the base plate, wherein the active region is configured to support the battery modules. Advantageously, the continuous insulating structures interrupt heat conduction along the second direction across the whole length of the base plate in the first direction. Further, a base plate with continuously extending insulating structures is easily manufactured. However, according to an alternative preferred embodiment, the insulating structures extend as broken lines across the whole length of the base plate in the first direction. In this embodiment the heat conductivity of the base plate along the second direction is sufficiently reduced, while the mechanical stability of the base plate might be increased to the aforementioned embodiment.

According to a first implementation of the invention, the insulating structures extend from a first main surface of the base plate to a second main surface of the base plate opposite to the first main surface. In other words, the insulation structure pass through the whole thickness of the base plate. In a cross section taken along the second direction of the base plate sections with first heat conductivity, e.g. from a first material, are followed by sections with second heat conductivity, e.g. from a second material, and vice versa. A base plate according to this embodiment can be produced by introducing, e.g. milling, a plurality of recesses along the first direction into a first main surface of a base plate, filling the recesses with a material with lower heat conductivity compared to the base plate and thinning the base plate from a second main surface opposite to the first surface until the second main surfaces is intersected by the recesses. Alternatively, a plurality of insulating structures, e.g. from thermally insulating and high temperature resistant polymer, are introduced in casting mold and are firmly bonded with a base plate, e.g. from aluminum, that is casted with this mold. A base plate according to this embodiment advantageously strongly decreases the heat conduction through the base plate in the second direction at each insulating structure, as no bypass path exists for heat conduction around the insulating structures.

According to a second implementation of the invention, the insulating structures are recesses that are embedded within the first main surface of the base plate. In other words, the recesses do not pass through the whole thickness of the base plate. A base plate according to this embodiment may be produced as described before by milling and filling the recesses, wherein thinning of the base plate from the second main surface is omitted. Further preferred, a base plate comprising such recesses is initially casted in an accordingly adapted mold and thus costs of material are reduced. According to this embodiment, the recesses are filled with a material with second heat conductivity that is lower than the first heat conductivity. Particularly preferred, the recesses are filled with a thermally insulating polymer. According to this embodiment, a mechanically stable base plate with anisotropic heat conductivity can be easily manufactured.

Further preferred, the base plate according to the present invention comprises a plurality of heat sink structures that extend in the first direction. Further preferred, the heat sink structures are spaced apart in the second direction and/or are parallel to each other. The base plate may comprise the heat sink structures additionally or alternatively to the insulating structures. The heat sink structures and the insulating structures may be arranged in alternating order along the second direction of the base plate. According to the present embodiment, the base plate is configured to support battery cells on top of the heat sink structures, such that the bottom surface of each battery case is in thermal contact with the heat sink structures. The heat sink structures are configured to increase the base plate's heat conductivity along the first direction. Particularly preferred, the heat sink structures comprise a third material with a third thermal conductivity that is higher than the first heat conductivity, i.e. the heat conductivity of the base plate, and/or the second heat conductivity, i.e. of the insulating structures.

Further preferred, the heat sink structures are cooling channels that are integrated in the base plate and that are configured for guiding a coolant. The cooling channels are configured to increase the heat conductivity and/or the heat dissipation of the base plate along the first direction, at least while they are filled with coolant. The heat sink structures, e.g. the coolant channels, preferably extend continuously across the whole length of the base plate along the first direction. Preferably, the coolant channels further comprise coolant ports at each of their terminal endings that are configured to be attached to an external coolant circuit. Further preferred, the coolant channels are formed of a third material with a third thermal conductivity that is higher than the first heat conductivity and/or the second heat conductivity. The third material might be copper. As a water-based or organic coolant flows through the copper coolant channels, the base plate's heat conductivity and heat dissipation is increased along the first direction, i.e. when compared to the second direction.

Another aspect of the present invention relates to an electric vehicle, comprising a battery system as described above or comprising a base plate as described above. Further aspects of the present invention will be apparent from the dependent claims, the attached drawings and/or the following description of the attached drawings.

### Brief Description of the Drawings

Features will become apparent to those of ordinary skill in the art by describing in detail exemplary embodiments with reference to the attached drawings in which:
- Fig. 1: illustrates a perspective view of a battery cell according to an embodiment;
- Fig. 2: illustrates a cross section of a battery cell according to an embodiment;
- Fig. 3: illustrates a schematic side view of a battery system according to the prior art;
- Fig. 4: illustrates a schematic side view of a battery system according to a first embodiment;
- Fig. 5: illustrates a schematic top view of (A) a battery system and (B) a base plate according to the first embodiment;
- Fig. 6: illustrates a schematic top view of (A) a battery system and (B) a base plate according to a second embodiment; and
- Fig. 7: illustrates a schematic side view of a battery system according to a third embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention." Although the embodiments herein are described with various specific embodiments, it will be obvious for a person skilled in the art to practice the invention with modifications. All such modifications are deemed to be within the scope of the claims.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value. Herein, the terms "above" and "below" are defined according to the z-axis. For example, the battery cell is positioned at the upper part of the z-axis, whereas the heat sink structure is positioned at a lower part thereof.

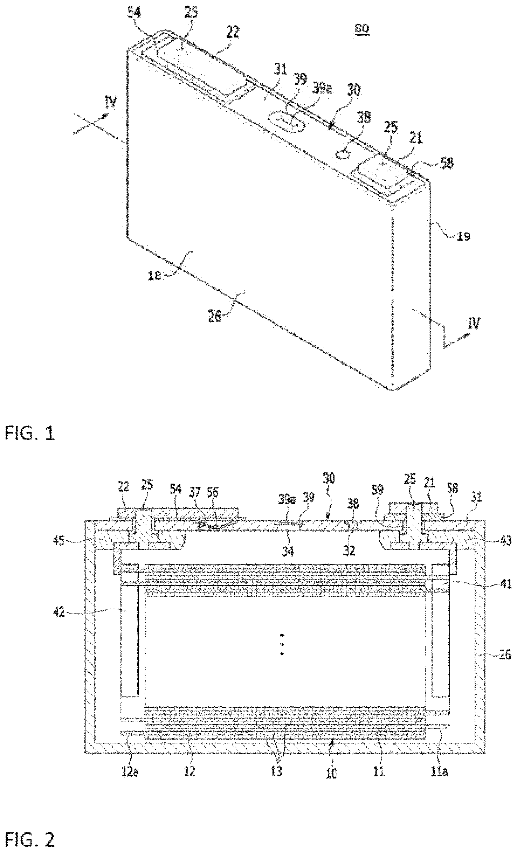

Fig. 1 is a perspective view illustrating a battery cell according to an exemplary embodiment and Fig. 2 is a cross-sectional view taken along the IV-IV line of Fig. 1.

As shown in Figs. 1 and 2, the battery cell 80 according to an embodiment may include an electrode assembly 10, and a case 26 for accommodating the electrode assembly 10, the case 26 containing an electrolyte. The battery cell 80 may also include a cap assembly 30 for sealing an opening of the case 26. The battery cell 80 will be described as a non-limiting example of a lithium ion secondary battery configured to have a prismatic shape.

The electrode assembly 10 may be formed as a jelly roll type electrode assembly by spirally winding a positive electrode 11 and a negative electrode 12 with a separator 13 there between. The positive electrode 11 and the negative electrode 12 may respectively include coated regions of current collectors formed of a thin metal foil, on which an active material may be coated, and may respectively include positive and negative electrode uncoated regions 11a and 12a of the current collectors on which no active material is coated. As a non-limiting example, the coated region of the positive electrode 11 may be formed by coating a base material formed of a metal foil, such as an aluminum foil, with an active material, such as transition metal oxide or the like. Also, the coated region of the negative electrode 12 may be formed by coating a base material formed of a metal foil, such as a copper or nickel foil, with an active material, such as carbon, graphite, or the like.

The positive electrode uncoated region 11a may be formed on one lateral end of the positive electrode 11 in a longitudinal direction of the positive electrode 11, and the negative electrode uncoated region 12a may be formed on one lateral end of the negative electrode 12 in a longitudinal direction of the negative electrode 12. The positive electrode uncoated region 11a and the negative electrode uncoated region 12a may be on sides that are opposite to each other with respect to the coated regions. Further, the separator 13 may include a plurality of separators, which may be spirally wound after the positive electrode 11, the negative electrode 12, and the separator 13 are alternately situated. The present invention is not limited thereto, and the electrode assembly 10 may be configured to have a structure including a plurality of sheets of the positive electrode 11, the separator 13, and the negative electrode 12 that are repeatedly stacked.

The electrode assembly 10 may be accommodated in the case 26 together with an electrolyte solution. The electrolyte solution may be made of a lithium salt, such as LiPF6 or LiBF4 with an organic solvent, such as EC, PC, DEC, EMC, or EMC. The electrolyte solution may be in a liquid, solid, or gel state. The case 26 may be configured to have a substantially cuboidal shape, and an opening may be formed at one side thereof. The case 26 may be formed of a metal, such as aluminum.

The case 26 may include a bottom surface 27 having a substantially rectangular shape, and may include a pair of first lateral walls, that are the wide side surfaces 18, 19, and a pair of second lateral walls connected vertically to end portions of the bottom surface, respectively, to form a space for accommodating the electrode assembly 10. The first lateral walls 18, 19 may face each other, and the second lateral walls may be positioned to face each other and may be connected to the first lateral walls 18, 19. A length of an edge at which the bottom surface 27 and a first lateral wall 18, 19 are connected to each other may be longer than that of an edge at which the bottom surface 27 and a second lateral wall are connected to each other. Preferably, adjacent first and second lateral walls enclose an angle of about 90°.

The cap assembly 30 may include a cap plate 31 for covering the opening of the case 26 by being bonded to the case 26, and may include a positive terminal 21 (first terminal) and a negative terminal 22 (second terminal), which are externally protruded from the cap plate 31 to be electrically connected to the positive electrode 11 and the negative electrode 12, respectively. The cap plate 31 may be configured to have a shape of a plate that may be extended in one direction, and that may be bonded to the opening of the case 26. The cap plate 31 may include an injection hole 32 and a vent hole 34 that communicate with an interior of the cap assembly 30. The injection hole 32 may be configured to allow the injection of the electrolyte solution, and a sealing cap 38 may be mounted thereon or therein. Further, a vent member 39 including a notch 39a, which may be opened due to a predetermined pressure may be mounted to or in the vent hole 34.

The positive terminal 21 and the negative terminal 22 may be mounted to protrude upward from the cap plate 31. The positive terminal 21 may be electrically connected to the positive electrode 11 via a current collecting tab 41, and the negative terminal 22 may be electrically connected to the negative electrode 12 via a current collecting tab 42. A terminal connecting member 25 for electrically connecting the positive terminal 21 and the current collecting tab 41 may be mounted between the positive terminal 21 and the current collecting tab 41. The terminal connecting member 25 may be inserted into a hole formed at the positive terminal 21, such that a lower portion thereof may be welded to the current collecting tab 41.

A gasket 59 for sealing may be mounted between the terminal connecting member 25 and the cap plate 31, while being inserted into the hole through which the terminal connecting member 25 may extend. Further, a lower insulating member 43, into which the lower portion of the terminal connecting member 25 may be inserted, may be mounted under the cap plate 31. A connecting plate 58 for electrically connecting the positive terminal 21 and the cap plate 31 may be mounted between the positive terminal 21 and the cap plate 31. The terminal connecting member 25 may be inserted into the connecting plate 58. Accordingly, the cap plate 31 and the case 26 may be positively electrified.

A terminal connecting member 25 for electrically connecting the negative terminal 22 and the current collecting tab 42, which is similar to the terminal connecting member 25, may be installed between the negative terminal 22 and the current collecting tab 42. The terminal connecting member 25 may be inserted into the hole formed at the negative terminal 22, such that an upper portion and a lower portion of the terminal connecting member 25 may be, respectively, welded to the negative terminal 22 and to the current collecting tab 42. A gasket for sealing, which is similar to the gasket 59, may be mounted between the negative terminal 22 and the cap plate 31, while being inserted into the hole through which the terminal connecting member 25 may extend. Further, a lower insulating member 45, which is for insulating the negative terminal 22 and the current collecting tab 42 from the cap plate 31, may be mounted under the cap plate 31.

An upper insulating member 54 for electrically insulating the negative terminal 22 and the cap plate 31 may be mounted between the negative terminal 22 and the cap plate 31. The terminal connecting member 25 may be inserted into a hole formed at the upper insulating member 54. The cap assembly 30 may include a short-circuiting hole 37, and a short-circuiting member 56 that may short-circuit the positive electrode 11 and the negative electrode 12 installed in the short-circuiting hole 37. The short-circuiting member 56 may be between the upper insulating member 54 and the cap plate 31, and the upper insulating member 54 may be configured to have a cutout that may be formed at a position corresponding to the short-circuiting member 56. The short-circuiting member 56 may overlap the negative terminal 22 exposed through the cutout, and may be separately located.

Further, the short-circuiting member 56 may be between the negative terminal 22 and the vent hole 34, and may be located closer to the negative terminal 22 than to the vent hole 34.

The short-circuiting member 56 may include a convexly curved portion that curves toward the electrode assembly 10, and may include an edge portion may be formed at an outside of the curved portion and fixed to the cap plate 31. The short-circuiting member 56 may be deformed to cause a short-circuit when an internal pressure of the battery cell 80 rises. In other words, the internal pressure of the battery cell 80 may rise when a gas is generated by an unwanted reaction in the battery cell 80. When the internal pressure of the battery cell 80 is increased to be higher than a level (e.g., a predetermined level), the curved portion may be deformed to be concavely curved toward an opposite direction, thereby causing the short-circuiting member 56 to contact the negative terminal 22 to cause a short-circuit.

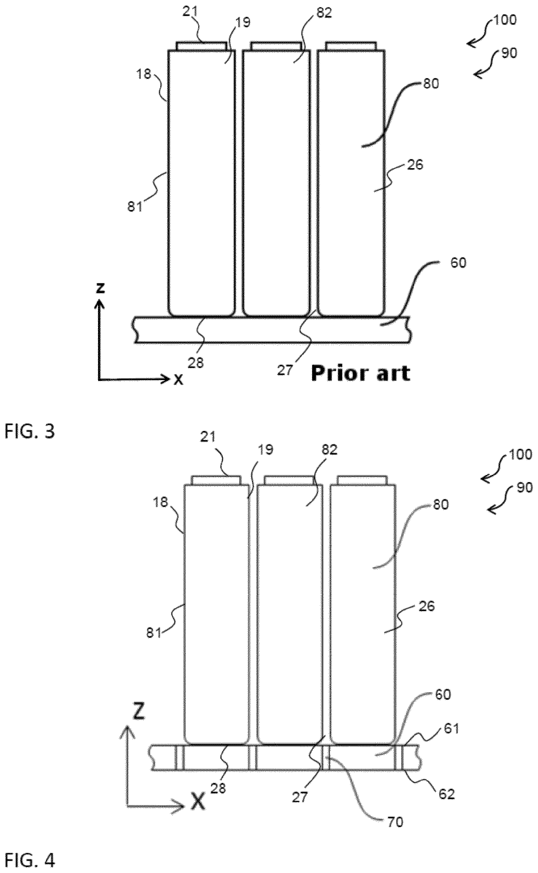

Figure 3 illustrates a schematic side view of a battery system 100 according to the prior art. Therein a battery module 90, comprising a plurality of stacked battery cells 80, is arranged on top of a base plate 60. Each of the battery cells 80 is a prismatic battery cell 80 as described above and comprises a battery case 26. The case 26 comprises a bottom surface 27 opposite to a cap assembly comprising the terminal 21, wherein the bottom surface 27 is in thermal contact with the base plate 60. The cells 80 are stacked such that a second wide side surface 19 of a first battery cell is facing a first wide side surface 18 of a second battery cell 82 and a gap 28 is formed between the adjacent battery cells 81, 82. The base plate 60 is a plane plate that is monolithically formed of a single material.

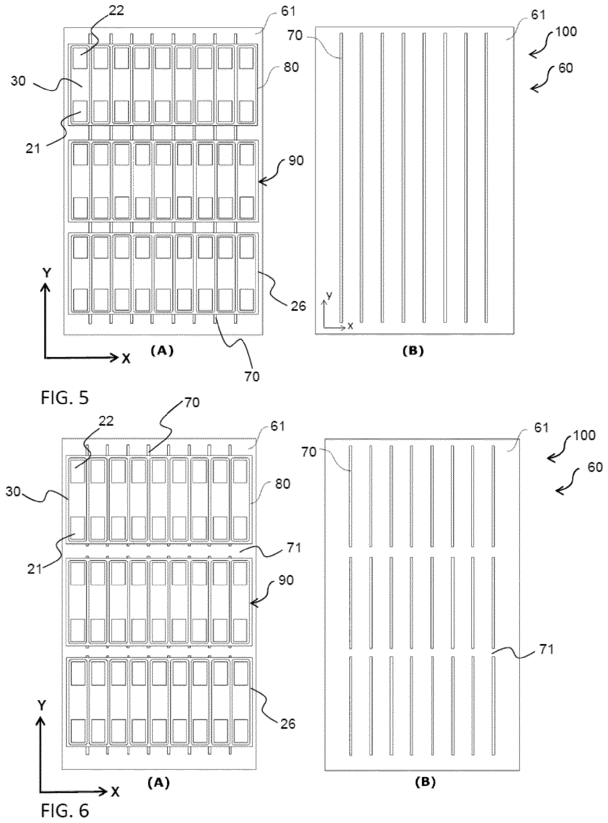

Figures 4 and 5 illustrate a schematic side view and a schematic top view of (A) a battery system 100 and (B) a base plate 60 according to a first embodiment of the present invention. The battery system 100 according to the first embodiment comprises a plurality of battery modules 90 that are spaced apart in a first direction y. Each battery module 90 comprises a plurality of prismatic battery cells 80 as described above that are stacked in a second direction x. Each of the battery cells 80 comprises a battery case 26 and a cap assembly 30, the latter e.g. comprising the positive and negative terminals 21, 22. Each battery case 26 further comprises a bottom surface 27 and a pair of first lateral walls 18, 19. The cells are positioned on a base plate 60 such that the bottom surface 27 of each of the battery cases 26 is in thermal contact with a first main surface 61 of the base plate 60. The cells 80 are stacked in the second direction x such that a second wide side surface 19 of a first battery cell 81 is facing a first wide side surface 18 of a second battery cell 82. A gap 28 is formed between the facing wide side surfaces 18, 19. The modules 90 are aligned to each other such that the gaps 28 of adjacent battery modules 90 are arranged on a straight lines along the first direction y of the base plate 60.

The base plate 60 according to the first embodiment is a casted aluminum base plate 60 that comprises a plurality of insulating structures 70. The insulating structures 70 extend in the first direction y, are spaced apart to each other in the second direction x and are parallel to each other. The insulating structures 70 extend substantially across the whole length of the base plate 60 along the first direction y of the base plate 60, wherein only narrow edge regions of the base plate 60 are left out. Each of the insulation structures 70 is aligned with a plurality of gaps 28 between adjacent cells 80 of a plurality of battery modules 90. The insulating structures 70 are formed of a thermally insulating polymer and extend from the first main surface 61 of the base plate 60 towards the second main surface 62 of the base plate 60 through the whole height of the base plate 60 in a third direction, perpendicular to the x- and y-direction.

The base plate 60 according to the first embodiment was formed by casting a plane aluminum base plate 60 and by milling a plurality of recesses into the first main surface 61 of the plane base plate 60. The milling depth was adjusted such that the recesses did not extend until the second main surface 62. Thus, breaking apart of the base plate 60 was avoided. The recesses were subsequently filled with a thermally insulating polymer. After curing of the polymer, the base plate 60 was grinded from the second main surface 62 until the filled recesses were exposed. Due to the thermally insulating polymer the base plate 60 holds together and the heat conductivity of the base plate 60 in the first direction y is larger than the heat conductivity of the base plate 60 in the second direction. Heat conduction along the second direction x is interrupted at each of the insulating structures 70.

Figure 6 illustrates a schematic top view of a battery system 100 and a base plate 60 according to a second embodiment. Again the battery system 100 comprises a plurality of battery modules 90 and a plurality of battery cells 80 that are arranged as described with respect to Figures 4 and 5. The base plate 60 of the second embodiment differs from that of the first embodiment in that each of the insulation structures 70 extends along the first direction y as broken line, wherein interstices 71 of the insulating structures 70 are disposed between adjacent battery modules 90. Further, the insulating structures 70 do not extend through the whole base plate 60 in the z-direction, i.e. in a direction perpendicular to the x- and y-directions. The insulation structures 70 are formed as a plurality of recesses 70 within the first main surface 61 of the base plate 60. The recesses 70 were either milled into the plane surface 61 of a casted aluminum base plate 60 or the base plate 60 was initially casted with such recesses 70 in a suitable mold. The recesses 70 can be left hollow or filled with a thermally insulating material, e.g. a thermally insulating polymer. The base plate 60 according to the second embodiment is more mechanically stable as the one of the first embodiment.

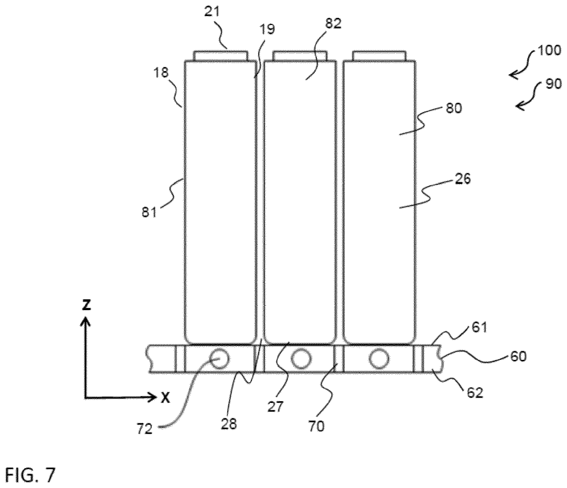

Figure 7 illustrates a schematic side view of a battery system 100 according to a third embodiment that also comprises a plurality of battery modules 90 and battery cells 80 as described above. The base plate 60 is essentially configured as the one described with respect to the first embodiment but additionally comprises a plurality of heat conducting structures 72. The heat conducting structures are coolant ducts 72 that are embedded within the aluminum base plate 60, wherein each coolant duct is aligned with the bottom surfaces 27 of a plurality of battery cells 80 of different battery modules 90 that are arranged on a straight line along the first direction y. Particularly, the coolant ducts 72 extend across the whole length of the base plate 60 along the first direction y and are further configured to be connected to an external coolant circuit. The base plate 60 was basically manufactured as described with respect to the first embodiment, wherein the copper coolant ducts 72 were placed in the mold before the aluminum base plate 60 was casted. In forming the insulating structures 70 the recesses were then milled in between adjacent coolant ducts 72. The base plate 60 according to the third embodiment comprises an enlarged heat conductivity and heat dissipation along the first direction y such that the anisotropy in heat conductivity between the first and second direction is further enlarged. Thus, the heat of a failing battery cell 80, e.g. during thermal runaway, is mainly transported to a neighboring battery module 90 and not to an adjacent battery cell of the same battery module 90.

### Reference signs

- 100: battery system
- 90: battery module
- 80: battery cell
- 81: first battery cell
- 82: second battery cell
- 10: electrode assembly
- 11: positive electrode
- 11a: positive electrode uncoated region
- 12: negative electrode
- 12a: negative electrode uncoated region
- 13: separator
- 18: first wide side surface
- 19: second wide side surface
- 21: positive terminal (first terminal)
- 22: negative terminal (second terminal)
- 25: terminal connecting member
- 26: case
- 27: bottom surface
- 28: gap

- 30: cap assembly
- 31: cap plate
- 32: injection hole
- 34: vent hole
- 37: short-circuiting hole
- 38: sealing cap
- 39: vent member
- 39a: notch
- 41, 42: current collecting tab
- 43, 45: lower insulating member
- 54: upper insulating member
- 56: short-circuiting member
- 58: connecting plane
- 59: gasket

- 60: base plate
- 61: first main surface
- 62: second main surface

- 70: insulating structure / recesses
- 71: interstices of insulating structures
- 72: heat sink structure / cooling channel

## Claims

1. A battery system (100), comprising:
a plurality of battery modules (90) arranged apart from each other in a first direction (y), each comprising a plurality of aligned battery cells (80) arranged in a second direction (x), each of the battery cells (80) comprising an electrode assembly (10) accommodated in a battery case (26) with a bottom surface (27); and
a base plate (60) supporting the battery modules (90) and comprising a first main surface (61) in thermal contact with the bottom surfaces (27) of each of the pluralities of battery cases (26),
wherein the thermal conductivity of the base plate (60) in the first direction (y) is larger than the thermal conductivity of the base plate (60) in the second direction (x),
wherein the base plate (60) comprises a first material with a first heat conductivity and a plurality of insulating structures (70) extending in the first direction (y) with a second heat conductivity lower than the first heat conductivity, and
wherein the insulating structures (70) extend from the first main surface (61) of the base plate (60) to a second main surface (62) of the base plate (60) opposite to the first main surface (61), or wherein the insulating structures are recesses (70) embedded within the first main surface (61) of the base plate (60).

2. A battery system (100) according to claim 1,
wherein each battery case (26) comprises a first wide side surface (18) and a second wide side surface (19) connected vertically to end portions of the bottom surface (27) and being aligned in the first direction (y),
wherein a gap (28) extends in the second direction (x) between a second wide side surface (19) of a first battery cell (81) and a first wide side surface wall (18) of a second battery cell (82) adjacent to the first battery cell (81) in the second direction (x), and
wherein each of the insulating structures (70) is aligned with a gap (28) along the first direction (y).

3. A battery system (100) according to claim 1 or 2, wherein the insulating structures (70) extend continuously across the whole length of the base plate (60) in the first direction (y).

4. A battery system (100) according to any one of the claims 1 to 3, wherein the insulating structures (70) extend as broken lines across the whole length of the base plate (60) in the first direction (y), wherein interstices (71) of the insulating structures (70) are disposed between adjacent battery modules (90).

5. A battery system (100) according to claim 1, wherein the recesses (70) are hollows or filled with a material with a second heat conductivity lower than the first heat conductivity.

6. A battery system (100) according to any one of the preceding claims, wherein the base plate (60) further comprises a plurality of heat sink structures (72) extending in the first direction (y), each heat sink structure (72) being aligned with a bottom surface (27) of at least one battery case (26).

7. A battery system (100) according to claim 6, wherein the heat sink structures (72) comprise a third material with a third thermal conductivity higher than the first heat conductivity and/or the second heat conductivity.

8. A battery system (100) according to claim 6 or 7, wherein the heat sink structures (72) are cooling channels (72) integrated in the base plate (60) and configured for guiding a coolant.

9. A battery system (100) according to any one of the claims 6 to 8, wherein the heat sink structures (72) extend continuously across the whole length of the base plate (60) in the first direction (y).

10. A base plate (60) for a battery system (100), configured for supporting a plurality of battery modules (90) and spanning a first main surface (61) between a first direction (y) and a second direction (x), comprising a first material with a first heat conductivity and a plurality of insulating structures (70) extending in the first direction (y) and comprising a second material with a second heat conductivity lower than the first heat conductivity, wherein the insulating structures (70) extend from the first main surface (61) of the base plate (60) to a second main surface (62) of the base plate (60) opposite to the first main surface (61) or the insulating structures are recesses (70) embedded within the first main surface (61) of the base plate (60) and filled with the second material, and wherein the thermal conductivity of the base plate (60) in the first direction (y) is larger than the thermal conductivity of the base plate (60) in the second direction (x).

11. Base plate (60) according to claim 10, comprising the features as defined in any one of the claims 3, 4 and 6 to 9.

12. Electric vehicle, comprising a battery system (100) according to any one of the claims 1 to 9 or a base plate (60) according to claim 10 or 11.

## Patentansprüche

1. Ein Batteriesystem (100), aufweisend:
eine Vielzahl von Batteriemodulen (90), die getrennt voneinander in einer ersten Richtung (y) angeordnet sind, wobei jedes eine Vielzahl ausgerichteter Batteriezellen (80), die in einer zweiten Richtung (x) angeordnet sind, aufweist, wobei jede der Batteriezellen (80) eine Elektrodenanordnung (10), die in einem Batteriegehäuse (26) mit einer unteren Fläche (27) aufgenommen ist, aufweist; und
eine Grundplatte (60), die die Batteriemodule (90) trägt und eine erste Hauptfläche (61) in thermischem Kontakt mit den unteren Flächen (27) von jedem der Vielzahl der Batteriegehäuse (26) aufweist,
wobei die Wärmeleitfähigkeit der Grundplatte (60) in der ersten Richtung (y) größer als die Wärmeleitfähigkeit der Grundplatte (60) in der zweiten Richtung (x) ist,
wobei die Grundplatte (60) ein erstes Material mit einer ersten Wärmeleitfähigkeit und eine Vielzahl von Isolierungsstrukturen (70), die sich in die erste Richtung (y) erstrecken, mit einer zweiten Wärmeleitfähigkeit, die niedriger als die erste Wärmeleitfähigkeit ist, aufweist, und
wobei sich die Isolierungsstrukturen (70) von der ersten Hauptfläche (61) der Grundplatte (60) zu einer zweiten Hauptfläche (62) der Grundplatte (60), die der ersten Hauptfläche (61) gegenüberliegt, erstrecken, oder wobei die Isolierungsstrukturen Ausnehmungen (70), die in der ersten Hauptfläche (61) der Grundplatte (60) eingebettet sind, sind.

2. Ein Batteriesystem (100) nach Anspruch 1,
wobei jedes Batteriegehäuse (26) eine erste breite Seitenfläche (18) und eine zweite breite Seitenfläche (19), die mit Endabschnitten der unteren Fläche (27) vertikal verbunden sind und in der ersten Richtung (y) ausgerichtet sind, aufweist,
wobei sich eine Lücke (28) in die zweite Richtung (x) zwischen einer zweiten breiten Seitenfläche (19) einer ersten Batteriezelle (81) und einer ersten breiten Seitenflächenwand (18) einer zweiten Batteriezelle (82), die in der zweiten Richtung (x) benachbart zur ersten Batteriezelle (81) ist, erstreckt, und
wobei jede der Isolierungsstrukturen (70) mit einer Lücke (28) entlang der ersten Richtung (y) ausgerichtet ist.

3. Ein Batteriesystem (100) nach Anspruch 1 oder 2, wobei sich die Isolierungsstrukturen (70) durchgängig über die gesamte Länge der Grundplatte (60) in die erste Richtung (y) erstrecken.

4. Ein Batteriesystem (100) nach einem der Ansprüche 1 bis 3, wobei sich die Isolierungsstrukturen (70) als unterbrochene Linien über die gesamte Länge der Grundplatte (60) in die erste Richtung (y) erstrecken, wobei Zwischenräume (71) der Isolierungsstrukturen (70) zwischen benachbarten Batteriemodulen (90) angeordnet sind.

5. Ein Batteriesystem (100) nach Anspruch 1, wobei die Ausnehmungen (70) Hohlräume sind oder mit einem Material mit einer zweiten Wärmeleitfähigkeit, die niedriger als die erste Wärmeleitfähigkeit ist, gefüllt sind.

6. Ein Batteriesystem (100) nach einem der vorhergehenden Ansprüche, wobei die Grundplatte (60) ferner eine Vielzahl von Kühlkörperstrukturen (72), die sich in die erste Richtung (y) erstrecken, aufweist, wobei jede Kühlkörperstruktur (72) mit einer unteren Fläche (27) zumindest eines Batteriegehäuses (26) ausgerichtet ist.

7. Ein Batteriesystem (100) nach Anspruch 6, wobei die Kühlkörperstrukturen (72) ein drittes Material mit einer dritten Wärmeleitfähigkeit, die höher als die erste Wärmeleitfähigkeit und/oder die zweite Wärmeleitfähigkeit ist, aufweisen.

8. Ein Batteriesystem (100) nach Anspruch 6 oder 7, wobei die Kühlkörperstrukturen (72) Kühlkanäle (72) sind, die in der Grundplatte (60) integriert sind und konfiguriert sind, um ein Kühlmittel zu leiten.

9. Ein Batteriesystem (100) nach einem der Ansprüche 6 bis 8, wobei sich die Kühlkörperstrukturen (72) durchgängig über die gesamte Länge der Grundplatte (60) in die erste Richtung (y) erstrecken.

10. Eine Grundplatte (60) für ein Batteriesystem (100), konfiguriert, um eine Vielzahl von Batteriemodulen (90) zu tragen und eine erste Hauptfläche (61) zwischen einer ersten Richtung (y) und einer zweiten Richtung (x) aufzuspannen, aufweisend ein erstes Material mit einer ersten Wärmeleitfähigkeit und eine Vielzahl von Isolierungsstrukturen (70), die sich in die erste Richtung (y) erstrecken und ein zweites Material mit einer zweiten Wärmeleitfähigkeit, die niedriger als die erste Wärmeleitfähigkeit ist, aufweisen, wobei sich die Isolierungsstrukturen (70) von der ersten Hauptfläche (61) der Grundplatte (60) zu einer zweiten Hauptfläche (62) der Grundplatte (60), die der ersten Hauptfläche (61) gegenüberliegt, erstrecken oder wobei die Isolierungsstrukturen Ausnehmungen (70) sind, die in der ersten Hauptfläche (61) der Grundplatte (60) eingebettet sind und mit dem zweiten Material gefüllt sind, und wobei die Wärmeleitfähigkeit der Grundplatte (60) in der ersten Richtung (y) größer als die Wärmeleitfähigkeit der Grundplatte (60) in der zweiten Richtung (x) ist.

11. Grundplatte (60) nach Anspruch 10, aufweisend die Merkmale wie in einem der Ansprüche 3, 4 und 6 bis 9 definiert.

12. Elektrofahrzeug, aufweisend ein Batteriesystem (100) nach einem der Ansprüche 1 bis 9 oder eine Grundplatte (60) nach Anspruch 10 oder 11.

## Revendications

1. Système de batterie (100) comprenant :
une pluralité de modules de batterie (90) agencés à distance les uns des autres dans une première direction (y), chacun comprenant une pluralité d'éléments de batterie (80) alignés agencés dans une seconde direction (x), chacun des éléments de batterie (80) comprenant un ensemble d'électrodes (10) logé dans un boîtier de batterie (26) avec une surface inférieure (27) ; et
une plaque de base (60) supportant les modules de batterie (90) et comprenant une première surface principale (61) en contact thermique avec les surfaces inférieures (27) de chacun des pluralités de boîtiers de batterie (26),
dans lequel la conductivité thermique de la plaque de base (60) dans la première direction (y) est supérieure à la conductivité thermique de la plaque de base (60) dans la seconde direction (x),
dans lequel la plaque de base (60) comprend un premier matériau avec une première conductivité thermique et une pluralité de structures isolantes (70) s'étendant dans la première direction (y) avec une deuxième conductivité thermique inférieure à la première conductivité thermique, et
dans lequel les structures isolantes (70) s'étendent à partir de la première surface principale (61) de la plaque de base (60) jusqu'à une seconde surface principale (62) de la plaque de base (60) opposée à la première surface (61), ou dans lequel les structures isolantes sont des évidements (70) encastrés dans la première surface principale (61) de la plaque de base (60).

2. Système de batterie (100) selon la revendication 1,
dans lequel chaque boîtier de batterie (26) comprend une première surface latérale large (18) et une seconde surface latérale large (19) raccordées verticalement aux parties d'extrémité de la surface inférieure (27) et étant alignées dans la première direction (y),
dans lequel un espace (28) s'étend dans la seconde direction (x) entre une seconde surface latérale large (19) d'un premier élément de batterie (81) et une première paroi de surface latérale large (18) d'un second élément de batterie (82) adjacent au premier élément de batterie (81) dans la seconde direction (x), et
dans lequel chacune des structures isolantes (70) est alignée avec un espace (28) le long de la première direction (y).

3. Système de batterie (100) selon la revendication 1 ou 2, dans lequel les structures isolantes (70) s'étendent de manière continue sur toute la longueur de la plaque de base (60) dans la première direction (y).

4. Système de batterie (100) selon l'une quelconque des revendications 1 à 3, dans lequel les structures isolantes (70) s'étendent sous forme de lignes en pointillés sur toute la longueur de la plaque de base (60) dans la première direction (y), dans lequel des interstices (71) des structures isolantes (70) sont disposés entre les modules de batterie (90) adjacents.

5. Système de batterie (100) selon la revendication 1, dans lequel les évidements (70) sont des creux ou remplis avec un matériau avec une deuxième conductivité thermique inférieure à la première conductivité thermique.

6. Système de batterie (100) selon l'une quelconque des revendications précédentes, dans lequel la plaque de base (60) comprend en outre une pluralité de structures de dissipateur de chaleur (72) s'étendant dans la première direction (y), chaque structure de dissipateur de chaleur (72) étant alignée avec une surface inférieure (27) d'au moins un boîtier de batterie (26).

7. Système de batterie (100) selon la revendication 6, dans lequel les structures de dissipateur de chaleur (72) comprennent un troisième matériau avec une troisième conductivité thermique supérieure à la première conductivité thermique et/ou à la deuxième conductivité thermique.

8. Système de batterie (100) selon la revendication 6 ou 7, dans lequel les structures de dissipateur thermique (72) sont des canaux de refroidissement (72) intégrés dans la plaque de base (60) et configurés pour guider un réfrigérant.

9. Système de batterie (100) selon l'une quelconque des revendications 6 à 8, dans lequel les structures de dissipateur de chaleur (72) s'étendent de manière continue sur toute la longueur de la plaque de base (60) dans la première direction (y).

10. Plaque de base (60) pour un système de batterie (100), configurée pour supporter une pluralité de modules de batterie (90) et enjambant une première surface principale (61) entre une première direction (y) et une seconde direction (x), comprenant un premier matériau avec une première conductivité thermique et une pluralité de structures isolantes (70) s'étendant dans la première direction (y) et comprenant un deuxième matériau avec une deuxième conductivité thermique inférieure à la première conductivité thermique, dans laquelle les structures isolantes (70) s'étendent à partir de la première surface principale (61) de la plaque de base (60) jusqu'à une seconde surface principale (62) de la plaque de base (60) opposée à la première surface principale (61) ou les structures isolantes sont des évidements (70) encastrés dans la première surface principale (61) de la plaque de base (60) et remplis avec le deuxième matériau, et dans laquelle la conductivité thermique de la plaque de base (60) dans la première direction (y) est supérieure à la conductivité thermique de la plaque de base (60) dans la seconde direction (x).

11. Plaque de base (60) selon la revendication 10, comprenant les caractéristiques selon l'une quelconque des revendications 3, 4 et 6 à 9.

12. Véhicule électrique comprenant un système de batterie (100) selon l'une quelconque des revendications 1 à 9 ou une plaque de base (60) selon la revendication 10 ou 11.
